# EUROPEAN PATENT APPLICATION

(11) **EP 3 671 532 A1**
(43) Date of publication of application: **24.06.2020**
(21) Application number: 18213945.1
(22) Date of filing: 19.12.2018
(51) Int. Cl.: G06K 9/00

(54) **DRIVER ASSISTANCE SYSTEM AND METHOD FOR A MOTOR VEHICLE**

(71) Applicant: Veoneer Sweden AB, 447 83 Vårgårda (SE)
(72) Inventor: SAVEROS, Fredrik, 583 30 Linköping (SE); ENVALL, Linus, 583 30 Linköping (SE); HALLMEN, Mathias, 583 30 Linköping (SE)
(74) Representative: Müller Verweyen

(57) **Abstract**

A driver assistance system for a motor vehicle comprises at least one imaging device (12) adapted to capture images from the surrounding of the motor vehicle, and a processing device (14) adapted to calculate the optical flow of consecutive images from said imaging device (12) and to segment said calculated optical flow using a Hough transform (53) in order to detect objects in the captured images. The Hough transform (53) is adapted to search for a pre-defined low-degree function (70) in a low-dimensional parameter space.

## Description

The invention relates to a driver assistance system for a motor vehicle, comprising at least one imaging device adapted to capture images from the surrounding of the motor vehicle, and a processing device adapted to calculate the optical flow of consecutive images from said imaging device and to segment said calculated optical flow using a Hough transform in order to detect objects in the captured images. The invention also relates to a corresponding driver assistance method.

Image position and image motion are important information that can be converted to positions and movements, scaled by the inverse of the distance, in the real-world scene. Given a sequence of images containing objects, it can be difficult to detect and separate objects from their surroundings and estimate the object motion, especially in real-time applications.

Using a model for the optical flow on objects, for example, vehicles, pedestrians, road etc., the optical flow combined with the Hough transform can be used for simultaneous object detection and segmentation. For example, Ying Wu, "Optical Flow and Motion Analysis", ECE4532 Advanced Computer Vision Notes Series 6, discloses how to use the Hough transformation for optical flow computation. However, such an approach is computationally very demanding and has not been established in a practical motor vehicle.

The problem underlying the present invention is to provide a driver assistance system and method allowing for simultaneous object detection and segmentation in a computationally efficient manner.

The invention solves this problem with the features of the independent claims. According to the invention, the Hough transform is adapted to search for a pre-defined low-degree function in a low-dimensional parameter space, where low in either case means at most five, preferably at most four, more preferably at most three, most preferably two.

The invention has found out that by making certain assumptions, the computational complexity of estimating a set of parameters using the Hough transform can be drastically reduced.

In particular, in a system for object detection, one is usually interested in detecting objects or obstacles like pedestrians, other vehicles, motorcycles, bicycles and/or large animals etc. which can be approximated as a plane, or more precisely a planar area, which is parallel to the image plane. In a further approximation, obstacles like pedestrians, other vehicles, motorcycles, bicycles and/or large animals etc. i.e. display only relative translational motion, without relative rotational motion component. Under both above assumptions, the Hough transform can be used to search for a line, thus reducing the number of parameters to two. However, making only one of the above assumptions or one or more similar assumptions, the number of parameters can be larger than two, and/or the parameter space can be higher-dimensional.

Generally, using a parametric representation of objects, the Hough transform fills a parameters space using a voting procedure where each feature votes for the object it supports. Instances of objects can then be extracted by finding local maxima in the parameter space.

In a preferred embodiment, the parameter space to be searched by the Hough transform is two-dimensional. In this case, the parameter space is preferably spanned by a one-dimensional component of optical flow versus the image row. It is in this representation that an obstacle in the field of view of the imaging device advantageously appears as a straight line, which can be easily determined. Therefore, a straight line is preferably used as said predefined function. However, a polynomial function with a higher degree than a straight line may alternatively be used as said predefined function.

Preferably, only a one-dimensional component of optical flow is considered by said Hough transform. The one-dimensional component of optical flow to be considered by the Hough transform preferably is the vertical component of the optical flow. In this embodiment, the horizontal component of the optical flow is preferably not considered by said Hough transform. However, the one-dimensional component of optical flow to be considered by the Hough transform could also be the horizontal component of the optical flow, or a one-dimensional optical flow in any intermediate direction, for example in a near-vertical direction. Efficient techniques are known for computing the one-dimensional flow in a particular direction, only, with much less computational cost than the full two-dimensional optical flow. If such a technique is established, the computational complexity can be further reduced.

In a particularly preferred embodiment of the invention, the parameter space is spanned by the vertical component of optical flow versus an image row number.

Very preferably, the vertical part of the optical flow is approximated as fv(y) = k·y + my, where y is the image row, and k and my are used as model parameters in said Hough transformation.

Preferably a polar transform is applied to the parameter space in order to obtain a parameter space in polar coordinates to be searched by the Hough transform. Using polar coordinates, the parameter space can be limited to a finite range of parameter values. As a result, the calculation can be made very fast, since the two-dimensional Hough transform has a complexity (Ordo) of only O(min(p1,p2)·N), where p1 and p2 are the number of discrete values of each parameter, respectively, investigated in the Hough transform, and N is the number of optical flow points in the optical flow image.

Preferably, the resolution of the two-dimensional parameter space on which the search is performed by the Hough transform is significantly lower than the resolution of the raw images captured by said imaging device. Advantageously, the resolution of the parameter space can be kept quite low, since the Hough transform is used to segment objects, only, for which task a particularly high resolution is not necessary. Specifically, the resolution has only be high enough to separate objects to be detected, like pedestrians or other vehicles, from the surrounding background.

The processing device is adapted to perform image processing preferably for simultaneous object detection, object segmentation, i.e. separation from the background, and relative motion estimation. Preferably, the position of a detected object is obtained from the coordinates of the pixels voted for the detected object. Preferably, the motion of a detected object is obtained from the Hough transform parameters corresponding to the detected object.

Preferably, a final estimation is performed using a re-estimator. Preferably, the re-estimation is computationally simpler than said Hough transform. Specifically, detected objects are refined by re-estimating the model parameters. In a preferred embodiment, the model parameters are re-estimated by a least squares regression on the vertical optical flow points that are considered to be part of the detected object.

In the following the invention shall be illustrated on the basis of preferred embodiments with reference to the accompanying drawings, wherein:
- Fig. 1: shows a driver assistance system for a motor vehicle;
- Fig. 2: shows a flow diagram of a driver assistance method;
- Fig. 3: shows an image of a pedestrian (left) and a corresponding vertical optical flow image (right); and
- Fig. 4: shows a diagram of the image pixel values of the vertical optical flow versus the image row number.

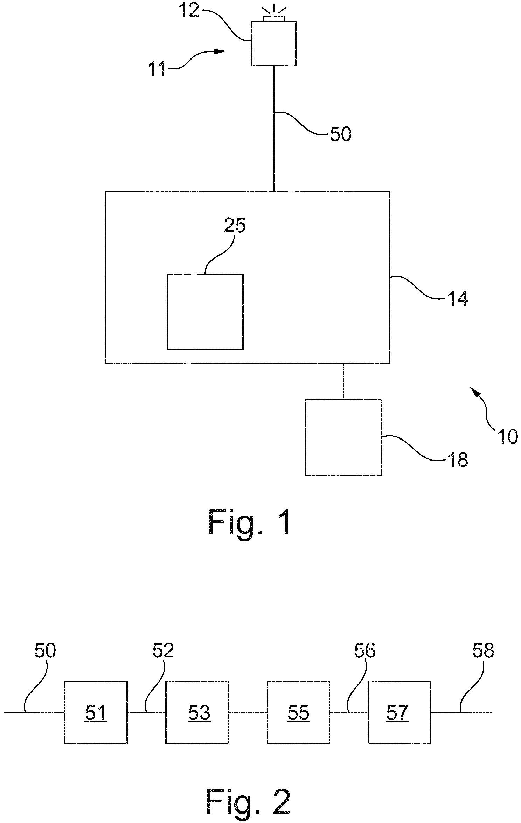

The driver assistance system 10 is to be mounted in or to a motor vehicle and comprises an imaging apparatus 11 for capturing images of a region surrounding the motor vehicle, for example a region in front of the motor vehicle. The imaging apparatus may be mounted for example behind the windscreen or in the grille. Preferably the imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12 in particular forming a stereo imaging apparatus 11. In other embodiments, like in Figure 1, only one imaging device 12 forming a mono imaging apparatus 11 is used.

The imaging apparatus 11 is coupled to an on-board data processing device 14 adapted to process the image data 50 received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing device 14 may comprise a dedicated hardware device, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM, GPU and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing device 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle 2 is an autonomous vehicle adapted to drive partly or fully autonomously or automatically, and driving actions of the driver are partially and/or completely replaced or executed by the ego vehicle 2.

A scheme of the algorithm used for object detection and segmentation will be described in the following with reference to Figure 2.

The image data 50 from the imaging device 12 or camera is input to an optical flow calculator 51. The optical flow calculator 51 calculates the optical flow based on two or more consecutive image frames from the same imaging device 12. In order to do this, consecutive image frames from the same imaging device 12 are stored in the data memory 25. Following the usual definition, the optical flow is the two-dimensional apparent relative motion between the observer (camera 12) and the scene between two views (images of two consecutive image frames) .

The optical flow calculator 51 may calculate the full two-dimensional optical flow, i.e. the optical flow in the horizontal and the vertical directions. In this case, the vertical component of the optical component is extracted from the 2-dimensional optical flow afterwards. Alternatively, the optical flow calculator 51 may calculate the one-dimensional optical flow in the vertical direction, only.

The one-dimensional optical flow 52 in the vertical direction, which is called vertical optical flow 52 in the following, is input to a Hough transform algorithm 53. For each pixel in the vertical optical flow image 52, the Hough transform 53 votes for supported models in the Hough transform parameter space. The supported models in particular include a linear model fv(y) of the vertical optical flow corresponding to obstacles in the vehicle environment.

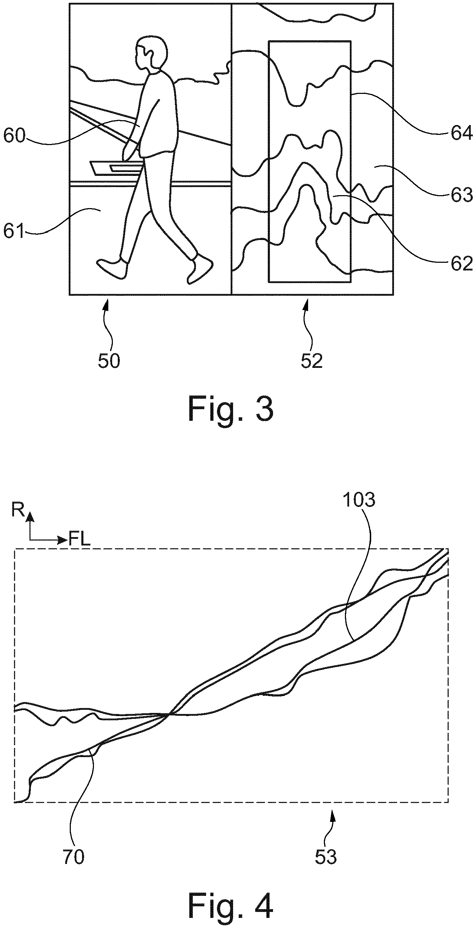

In a typical road scenario with a camera 12 mounted to a motor vehicle with its optical axis approximately parallel to the road, obstacles like cars, pedestrians and road boundaries can be modeled as rigid vertical planes parallel to the image plane. If the time elapsed between the capture of consecutive image frames is small, the relative motion between the camera 12 and obstacles can be approximated as only translation, i.e. rotational motion components can be disregarded. With these assumptions, the vertical part of the optical flow fv(y) can be approximated by a linear model in the form fv(y) = k·y + my, where k and my are used as model parameters in said Hough transformation 53. Non-obstacles, like the road, will not follow this model. In this manner the processing device 14 can easily decide which points in the parameters space belong to an obstacle, like the pedestrian in Figure 3 which will be explained later.

The supported models may include other models, like a parabolic model for the road ahead the motor vehicle.

In the next step 55, objects are extracted from the two-dimensional parameter space by finding local maxima. An object's position is obtained from the coordinates of the pixels voted for that particular object. The motion of an object is obtained from the parameters k, my corresponding to the particular object. Detection data 56 about detected objects including their position and motion is output for further processing and decision making.

In an optional final refinement step 57, the object detection can be refined by re-estimating the model parameters using a re-estimator 57 more simple than the Hough transform, which re-estimator 57 does not have to be robust with respect to outliers. For example, the re-estimator 57 can be based on a least squares regression on the vertical optical flow points which are considered to be part of the particular object.

Instead of using the classical Hough transform in step 53 / 55, some of its variations and/or extensions can be used, as well as any algorithm that maximizes the number of votes for a parameter set in the parameter space.

The optical flow image 52 can be either dense, that is an optical flow value is generated for every pixel of the raw images from the imaging device 12, or sparse, where an optical flow value is generated for a part of the raw images from the imaging device 12, only, for example for every n-th pixel of the raw images from the imaging device 12, or any other regular or irregular sub-group of pixels. Generally, a sparse optical flow image has a lower resolution than the raw images from the imaging device 12, while a dense sparse optical flow image has about the same resolution as the raw images from the imaging device 12. A dense optical flow image 52 can be preferable since object segmentation will be easier in a dense optical flow image 52.

The optical flow image 52 can be divided in patches to reduce the number of different motions and to improve segmentation. The division into patches can be performed statically or dynamically, for example by using classified objects.

The Hough transform 53 usually requires a lot of data memory 25, since it usually operates on several dimensions. Preferably, the processing device 14 is adapted to determine circumstances where only one object is in a captured image, or in an image patch thereof. In case such a circumstance is determined, the data memory 25 usage can be reduced by calculating the maximum value of one dimension at a time. Instead of O(p1·p2·...·pn) complexity in data memory 25 usage, the complexity is at most O(max(p1,p2,...,pn)), where n is the number of parameters, and pk is the number of discrete values investigated for parameter k.

Other refinements are possible, for example using other re-estimators than based on least squares, or estimating boundaries of objects more precisely.

In the following, an exemplary embodiment will be described with reference to Figure 3 and 4.

The left part of Figure 3 shows a captured image 50 of an obstacle 60 to be detected, here a pedestrian walking across a flat ground, like a road, while the camera 12 of the ego vehicle is moving closer to the pedestrian 60. The right part of the image shows a vertical optical flow image 52 computed from the image 50 in the left part of Figure 1. More specifically, for each pixel of the captured image 50 (dense), or for each multi-pixel picture element (sparse), a vertical optical flow value is calculated, where all vertical optical flow values form a vertical optical flow image 52.

In the right part of Figure 3, in the area of the pedestrian 60, the corresponding vertical optical flow values 62 change linearly from the bottom to the top of the pedestrian 60 with the image row number y, in agreement with the linear object model fv(y) given above.

The non-obstacle background 61 in the left side of Figure 3 is close to orthogonal to the camera 12 image plane. Consequently, in the right part of Figure 3, the vertical optical flow 63 of the road or non-obstacle background changes non-linearly with image row position y from bottom to top. By segregating regions of linearly changing vertical optical flow from regions of non-linearly changing vertical optical flow, the with rectangle 64 is found which approximately describes the position of the pedestrian 60.

In Figure 4, the vertical optical flow values from the right side of Figure 3 are plotted against the image row y, i.e. the vertical position in the image. The obstacle or pedestrian 60 gives rise to points distributed along a straight line 70 from the bottom left corner to the top right corner. On the other hand, the vertical optical flow of the non-obstacle background 61 gives rise to points spread along a 1/y curve across the image.

As a result, using the linear obstacle model defined by fv(y) = k·y + my, the obstacle or pedestrian 60 can be detected and separated from the background 61. At the same time, the relative motion of the obstacle or pedestrian 60 can be estimated. More specifically, the slope k of the line corresponds to the longitudinal movement, while the intercept my corresponds to the relative lateral movement.

## Claims

1. A driver assistance system for a motor vehicle, comprising at least one imaging device (12) adapted to capture images from the surrounding of the motor vehicle, and a processing device (14) adapted to calculate the optical flow of consecutive images from said imaging device (12) and to segment said calculated optical flow using a Hough transform (53) in order to detect objects in the captured images, **characterized in that** said Hough transform (53) is adapted to search for a pre-defined low-degree function (70) in a low-dimensional parameter space.

2. The driver assistance system as claimed in claim 1, **characterized in that** parameter space to be searched by the Hough transform (53) is two-dimensional.

3. The driver assistance system as claimed in any one of the preceding claims, **characterized in that** said predefined function (70) is a low-degree polynomial.

4. The driver assistance system as claimed in any one of the preceding claims, **characterized in that** said pre-defined function (70) is a straight line.

5. The driver assistance system as claimed in claim 4, **characterized in that** a straight line (70) found in the parameter space is identified as an obstacle (60) in the surrounding of the motor vehicle.

6. The driver assistance system as claimed in any one of the preceding claims, **characterized in that** only a one-dimensional component of optical flow is considered by said Hough transform (53).

7. The driver assistance system as claimed in claim 6, **characterized in that** the parameter space is spanned by the vertical component of optical flow fv(y) versus the image row number y.

8. The driver assistance system as claimed in claim 7, **characterized in that** the vertical part of the optical flow is approximated as fv(y) = k·y + my, where k and my are used as model parameters in said Hough transformation (53).

9. The driver assistance system as claimed in any one of the preceding claims, **characterized in that** a polar transform is applied to the parameter space, in order to obtain a parameter space in polar coordinates to be searched by the Hough transform (53).

10. The driver assistance system as claimed in any one of the preceding claims, **characterized in that** the resolution of the data points in the two-dimensional parameter space to be searched by the Hough transform (53) is lower than the resolution of the raw images captured by said imaging device (12).

11. The driver assistance system as claimed in any one of the preceding claims, **characterized in that** the position of a detected object is obtained from the coordinates of the pixels voted for the detected object.

12. The driver assistance system as claimed in any one of the preceding claims, **characterized in that** the motion of a detected object is obtained from the Hough transform parameters k, my corresponding to the detected object.

13. The driver assistance system as claimed in any one of the preceding claims, **characterized in that** a re-estimator (57) in said processing means is adapted to perform a re-estimation of the model parameters for refining said object detection.

14. The driver assistance system as claimed in claim 12, wherein said re-estimator is based on a least squares regression.

15. A driver assistance method for a motor vehicle, comprising capturing images from the surrounding of the motor vehicle, calculating the optical flow of consecutive captured images, and segmenting said calculated optical flow using a Hough transform (53) in order to detect objects in the captured images, **characterized in that** said Hough transform (53) searches for a pre-defined low-degree function in a low-dimensional parameter space.
